# FASCICULE DE BREVET EUROPEEN

(11) **EP 2 178 759 B1**
(45) Date de publication et mention de la délivrance du brevet: **11.04.2018**
(21) Numéro de dépôt: 08787052.3
(22) Date de dépôt: 08.08.2008
(51) Int. Cl.: B64D 29/06, B64D 29/08

(54) **DISPOSITIF DE VERROUILLAGE CONÇU POUR ETRE DISPOSÉ DANS UNE ZONE DE JONCTION D'UNE NACELLE**
VERSCHLUSSVORRICHTUNG ZUR ANORDNUNG IN EINER VERBINDUNGSREGION EINER GONDEL
LOCKING DEVICE DESIGNED TO BE ARRANGED IN A JUNCTION REGION OF A NACELLE

(30) Priorité: 20.08.2007 FR 0705928
(43) Date de publication de la demande: 28.04.2010
(73) Titulaire: Safran Nacelles, 76700 Gonfreville-l'Orcher (FR)
(72) Inventeur: SOULIER, Pascal-Marie, Paul, Marcel, F-76600 Le Havre (FR); DE SORBAY, Aurélie, F-76600 Le Havre (FR)
(74) Mandataire: Chevalier, Renaud Philippe
(86) Numéro de dépôt international: PCT/EP2008/060460
(87) Numéro de publication internationale: WO 2009/024487

(56) Documents cités:
- EP-A- 1 091 059
- WO-A-2006/033929
- US-A- 4 759 574
- US-A- 6 042 156
- US-A1- 2004 104 583

## Description

L'invention concerne un dispositif de verrouillage conçu pour être disposé dans une zone de jonction d'une nacelle.

Une nacelle est un élément de carénage permettant de protéger un réacteur d'un aéronef. Une nacelle comporte généralement une section avant d'entrée d'air, une section médiane destinée à entourer une soufflante du turboréacteur, et une section arrière formée à partir d'au moins une première et une seconde demi-coquilles montées mobiles en rotation sur un mat de manière à pouvoir se déployer chacune entre une position de travail et une position de maintenance.

Les deux demi-coquilles sont liées l'une à l'autre au niveau de zones de jonctions supérieures et inférieure, par l'intermédiaire de dispositifs de verrouillage.

Un dispositif de verrouillage classique disposé dans la zone de jonction de la nacelle comporte un système de verrouillage, destiné à être monté sur une première demi-coquille de la nacelle, coopérant avec un organe de retenue destiné à être monté sur une seconde demi-coquille, le système de verrouillage étant actionnable entre un état verrouillé et un état déverrouillé par rapport à l'organe de retenue, le système de verrouillage et l'organe de retenue étant déplaçables l'un par rapport à l'autre entre une position rapprochée de ceux-ci dans laquelle ils peuvent être verrouillés l'un par rapport à l'autre et une position écartée de ceux-ci.

De manière classique, le système de verrouillage est équipé d'une poignée que les opérateurs de maintenance ont tendance à rabattre pour des raisons de commodité, afin que cette poignée ne fasse pas saillie de la paroi de la nacelle dans sa partie inférieure de manière à ne pas gêner l'opérateur, comme dans le document EP 1 091 059. Lorsque l'opérateur rabat la poignée et que les demi-coquilles sont en position écartées l'une de l'autre, cela peut entraîner le verrouillage du système de verrouillage, en fonction de la position de ce dernier.

L'opérateur, voyant les deux demi-coquilles écartées l'une de l'autre, risque de considérer que les demi-coquilles sont correctement déverrouillées l'une par rapport l'autre, bien que ceci ne soit pas le cas. Ainsi, cette situation peut conduire pour le moins à une dégradation préjudiciable du matériel lors de l'écartement des deux demi-coquilles.

L'invention vise à remédier à cet inconvénient en proposant un dispositif de verrouillage permettant d'assurer un actionnement sûr du système de verrouillage de manière à éviter toute dégradation accidentelle de la nacelle.

A cet effet, l'invention concerne un dispositif de verrouillage du type précité caractérisé en ce que le système de verrouillage et/ou l'organe de retenue comportent des moyens de blocage, conçus pour autoriser le verrouillage du système de verrouillage par rapport à l'organe de retenue lorsque ceux-ci sont en position rapprochée, et pour interdire leur verrouillage lorsque ceux-ci sont en position écartée.

De cette manière, il n'est pas possible de placer le système de verrouillage en position verrouillée si l'organe de retenue n'est pas apte à coopérer avec celui-ci. Ainsi, tant que les demi-coquilles ne sont pas correctement rabattues, le système de verrouillage restera nécessairement en position déverrouillée.

Avantageusement, le système de verrouillage comporte un crochet apte à venir en prise avec l'élément de retenue, et un organe de manoeuvre coopérant avec le crochet de manière à réaliser l'engagement ou le dégagement de celui-ci par rapport à l'organe de retenue lors de l'actionnement de l'organe de manoeuvre, les moyens de blocage comportant des moyens de liaison reliés à l'organe de manoeuvre et déplacés lors de l'actionnement de celui-ci, et un organe formant butée mobile déplaçable entre une position de blocage dans laquelle les moyens de liaison viennent en appui contre l'organe formant butée mobile lors de l'actionnement de l'organe de manoeuvre, et une position de déblocage dans laquelle l'organe formant butée mobile est écarté de la trajectoire des moyens de liaison lors de l'actionnement de l'organe de manoeuvre.

De cette manière, lorsque les moyens de blocage sont en position de blocage, il est impossible d'actionner l'organe de manoeuvre qui est par exemple une poignée. Au contraire, lorsque les moyens de blocage sont en position de déblocage, c'est-à-dire lorsque les deux demi-coquilles sont en position rapprochées l'une de l'autre, l'organe de manoeuvre peut être actionné de manière à verrouiller le crochet sur l'organe de retenue.

Selon une caractéristique de l'invention, les moyens de liaison comportent un bras faisant saillie vers l'extérieur, l'organe formant butée mobile se présentant sous la forme d'un clapet mobile équipé d'un crochet formant butée. Selon l'invention, l'organe formant butée mobile est équipé d'au moins une patte d'actionnement présentant une extrémité d'actionnement, l'organe de retenue comportant au moins un plot dont l'extrémité libre vient en appui contre l'extrémité d'actionnement de la patte, en position rapprochée du système de verrouillage et de l'organe de retenue, de manière à déplacer l'organe formant butée mobile en position de déblocage.

Selon une possibilité de l'invention, l'organe formant butée mobile est soumis à des moyens de rappel élastiques aptes à le déplacer en position de blocage.

Avantageusement, le crochet comporte une extrémité recourbée apte à venir en prise avec l'élément de retenue, le crochet étant monté pivotant autour d'un axe d'extrémité situé à l'opposé de l'extrémité recourbée, le système de verrouillage comportant un axe principal, destiné à être rattaché fixement à la première demi-coquille, une articulation comprenant au moins une bielle de compression montée pivotante autour de l'axe principal et d'un axe intermédiaire positionné entre l'axe principal et l'axe d'extrémité, les moyens de liaison présentant une première branche destinée à coopérer avec organe formant butée mobile et une seconde branche reliée à la première par une zone médiane, la zone médiane du bras étant montée pivotante autour de l'axe d'extrémité, la seconde branche étant montée pivotante autour de l'axe intermédiaire.

Selon une forme de réalisation de l'invention, l'organe formant butée mobile est monté pivotant autour d'un axe d'articulation destiné à être fixe par rapport à la première demi-coquille.

L'invention concerne en outre une nacelle de turboréacteur comprenant une section avant d'entrée d'air, une section médiane destinée à entourer une soufflante du turboréacteur, et une section arrière formée à partir d'au moins une première et une seconde demi-coquilles montées mobiles en rotation sur un mat de manière à pouvoir se déployer chacune entre une position de travail dans laquelle les demi-coquilles sont rapprochées l'une de l'autre et une position de maintenance dans laquelle les demi-coquilles sont écartées l'une de l'autre, caractérisée en ce que la nacelle est équipée, dans une zone de jonction des deux demi-coquilles, d'au moins un dispositif de verrouillage selon l'invention, le système de verrouillage étant monté sur la première demi-coquille, l'organe de retenue étant monté sur la seconde demi-coquille.

L'invention concerne également un aéronef, caractérisé en ce qu'il comporte au moins une nacelle selon l'invention.

De toute façon, l'invention sera bien comprise à l'aide de la description qui suit en référence au dessin schématique annexé représentant, à titre d'exemple, une forme de réalisation de ce dispositif de verrouillage.
Figure 1 est une vue schématique d'une nacelle en coupe longitudinale;
Figure 2 est une vue éclatée de la nacelle, en perspective et vue de l'avant ;
Figure 3 est une vue en perspective du dispositif de verrouillage en position écartée des demi-coquilles ;
Figure 4 en est une vue de face, en position écartée des demi-coquilles ;
Figure 5 est une vue correspondant à la figure 3, en position rapprochée des demi-coquilles ;
Figures 6 à 8, sont des vues similaires à la figure 4, en position rapprochée des demi-coquilles et dans des positions successives d'actionnement de l'organe de manoeuvre.

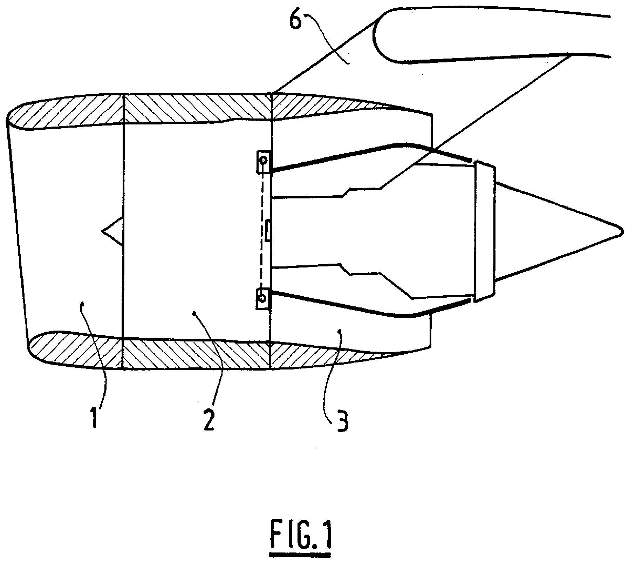

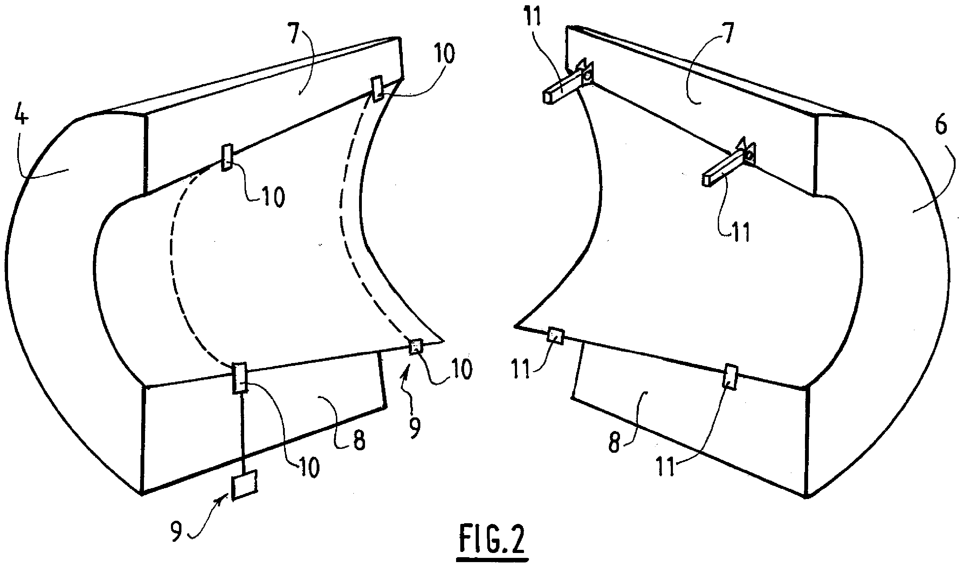

Les figures 1 et 2 représentent la structure générale d'une nacelle de turboréacteur selon l'invention. Celle-ci comprend une section avant 1 d'entrée d'air, une section médiane 2 destinée à entourer une soufflante du turboréacteur, et une section arrière 3 formée à partir d'au moins une première et une seconde demi-coquilles 4, 5 montées mobiles en rotation sur un mat 6 d'un aéronef de manière à pouvoir se déployer chacune entre une position de travail et une position de maintenance.

Chaque demi-coquille 4, 5 présente la forme générale d'un demi-cylindre creux, délimitant deux zones de jonction avec la demi-coquille lui faisant face, à savoir une zone de jonction supérieure 7 et une zone de jonction inférieure 8.

Les positions inférieures et supérieures sont également appelées respectivement positions 6 heures et 12 heures.

Les zones de jonctions 7, 8 comportent chacune des dispositifs de verrouillage 9 comprenant un système de verrouillage 10 et un organe de retenue 11 correspondant. Les dispositifs de verrouillage 9 des zones de jonction supérieure et inférieure 7, 8 peuvent ou non être reliées entre eux de manière à réaliser un actionnement simultané des dispositifs de verrouillage. Pour des raisons de lisibilité, seuls certains des dispositifs de verrouillage 9 ont été représentés.

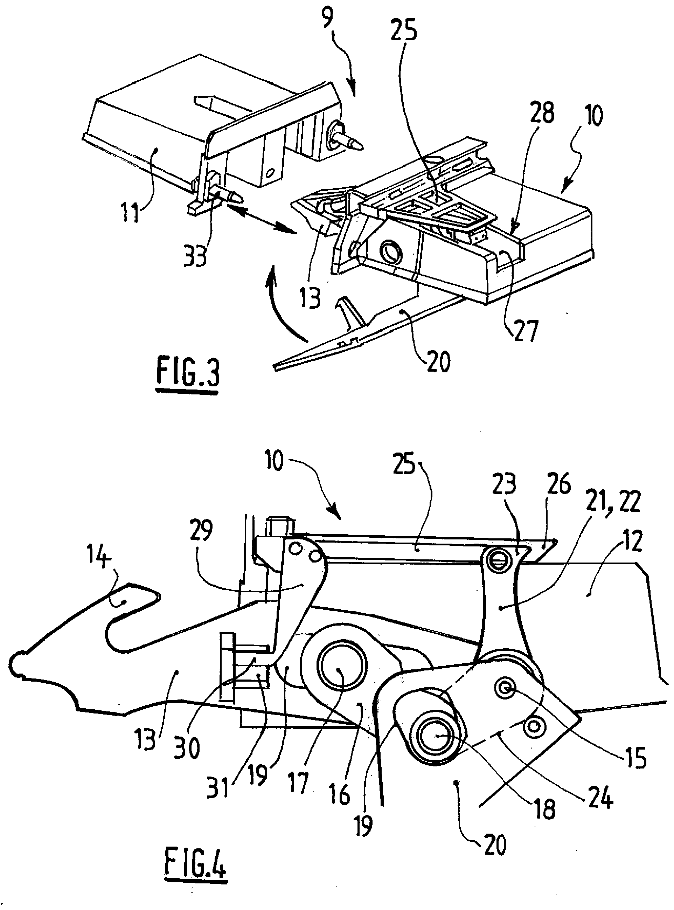

La figure 3 représente un tel dispositif de verrouillage 9 en position écartée des deux demi-coquilles 4, 5, c'est-à-dire en position écartée du système de verrouillage 10 et de l'organe de retenue 11.

Comme cela apparaît plus particulièrement en figure 4, le système de verrouillage 10 comporte un corps 12 fixé à la première demi-coquille 4 ainsi qu'un un crochet 13 comportant une première extrémité recourbée 14 et une seconde extrémité montée pivotante autour d'un axe d'extrémité 15. Le système de verrouillage 10 comporte de plus une bielle de compression 16 montée pivotante autour d'un axe principal 17 fixe par rapport au corps 12 et d'un axe intermédiaire 18 positionné entre l'axe principal 17 et l'axe d'extrémité 15.

L'axe principal 17 est monté dans une lumière oblongue 35 ménagée dans le crochet 13, l'axe intermédiaire 18 étant monté dans une lumière 19 d'une poignée 20 montée pivotante autour de l'axe d'extrémité 15.

La structure du système de verrouillage 10 est, jusqu'ici, comparable à celle décrite dans le brevet WO 2005/014962.

Le système de verrouillage 10 comporte en outre un bras de liaison 21 comportant une première branche 22 présentant une extrémité libre 23 dont la fonction est décrite ci-après et une seconde branche 24 reliée à la première par une zone médiane, la zone médiane du bras étant montée pivotante autour de l'axe d'extrémité 15, la seconde branche 24 étant montée pivotante autour de l'axe intermédiaire 18.

Le système de verrouillage 10 est de plus équipé d'un clapet mobile 25, monté pivotant sur le corps 12 au niveau d'une première extrémité et présentant un crochet 26 au niveau d'une seconde extrémité, le crochet 26 étant conçu pour coopérer avec l'extrémité libre 23 de la première branche 22 de manière à former une butée. Le clapet mobile 25 est soumis à l'action de moyens de rappel élastiques tendant à déplacer celui-ci dans sa position représentée en figure 4. Le corps 12 comporte une ouverture 27 permettant le passage du crochet 26 du clapet mobile 21, le bord 28 de l'ouverture 27 servant à l'appui du clapet mobile 25 dans sa position précitée.

Le clapet mobile 25 est relié fixement, de part et d'autre de celui-ci, à une patte 29 au niveau de sa première extrémité, chaque patte 29 comportant une extrémité libre recourbée 30 d'actionnement du clapet mobile 25. Les extrémités recourbées 30 font saillie à l'intérieur d'orifices 31 ménagés dans le corps 12.

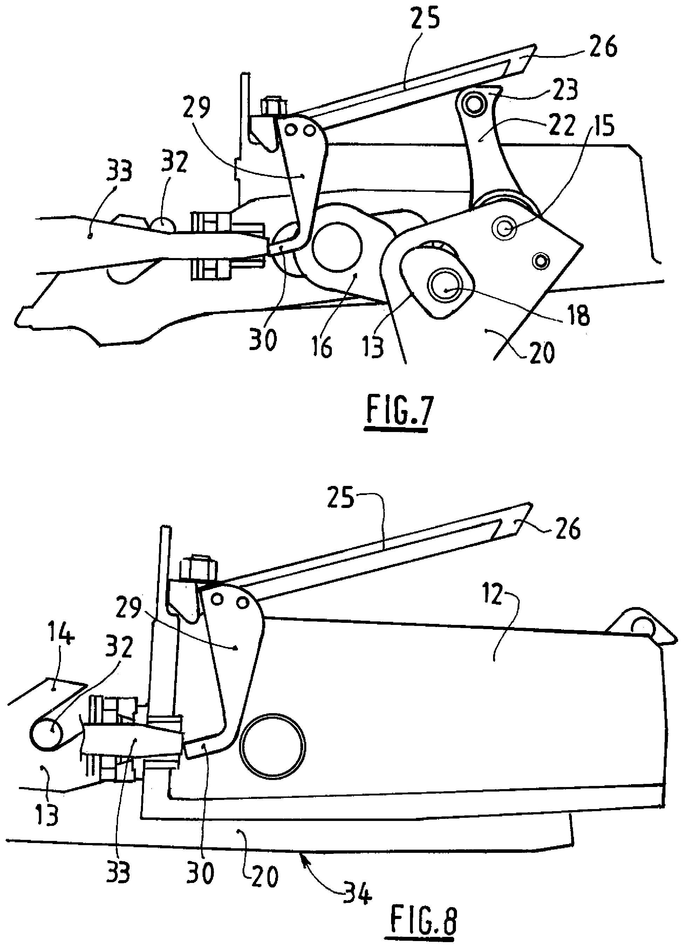

L'organe de retenue 11, visible en figure 3, est fixé à la seconde demi-coquille 5. Celui-ci comporte un axe de retenue 32, destiné à coopérer avec l'extrémité recourbée 14 du crochet 13 et visible plus particulièrement en figure 7 et 8. L'organe de retenue 11 comporte également deux plots en saillie 33, disposés de part et d'autre de l'axe de retenue 32, conçus pour venir prendre appui contre les extrémités recourbées 30 des pattes 29 du système de verrouillage 10.

Le fonctionnement du dispositif de verrouillage 9 va maintenant être décrit plus en détail.

Les figures 3 et 4 représentent le dispositif de verrouillage 9 en position écartées des demi-coquilles 4, 5. Dans cette position, le système de verrouillage 10 est écarté de l'organe de retenue 11 de sorte que les plots 33 ne viennent pas en appui contre les extrémités recourbées 30 des pattes 29 et que le clapet mobile 25 est maintenu en appui contre le bord 28 de l'ouverture 27 par les moyens de rappel élastiques. Le clapet mobile 25 est alors disposé en position de blocage. En effet, lorsqu'un opérateur actionne la poignée 20, c'est-à-dire fait pivoter celle-ci dans le sens anti-horaire, le bras 21 est entraîné en rotation dans le sens horaire. L'extrémité 23 vient alors en butée contre le crochet 26 du clapet mobile 25 de sorte que la rotation de la poignée 20 est limitée par rapport à la course totale nécessaire au verrouillage du système de verrouillage 10 sur l'organe de retenue correspondant 11.

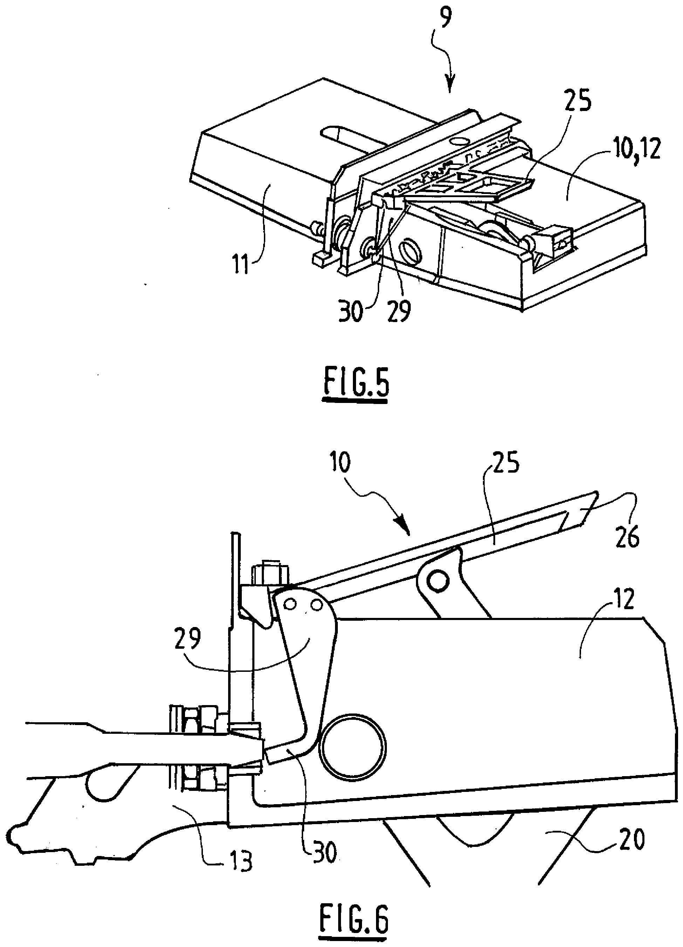

Les figures 5 à 8 illustrent le dispositif de verrouillage en position rapprochée des deux demi-coquilles 4, 5.

Dans cette position, les plots 33 de l'organe de retenue 11 prennent appui contre les extrémités 30 correspondantes des pattes 29, faisant ainsi pivoter le clapet mobile 25 de sa position de blocage décrite précédemment, à une position de déblocage, illustrée plus particulièrement aux figures 6 à 8.

Dans cette position, le crochet 26 du clapet mobile 25 est écarté de la trajectoire de l'extrémité libre 23 du bras 11 de sorte que le mouvement de rotation de la poignée 20 n'est pas entravé. De cette manière, il est possible de déplacer le crochet 13 vis-à-vis de l'axe de retenue 32, c'est-à-dire de verrouiller le système de verrouillage 10 par rapport à l'organe de retenue 11.

Une telle position de verrouillage est illustrée plus particulièrement à la figure 8, seule une partie des plots 33 étant représentée de manière à faciliter la compréhension du dessin. Dans cette position, la poignée 20 est rapprochée du crochet 13, la surface extérieure 34 de la poignée étant, dans cette position, destinée à affleurer la surface externe de la nacelle. On remarque que, dans cette position, l'extrémité recourbée 14 du crochet 13 a été déplacée par rapport à l'axe de retenue 32 de manière à assurer le verrouillage des deux demi-coquilles 4, 5 l'une par rapport à l'autre.

Comme il va de soi l'invention ne se limite pas à la seule forme de réalisation de ce dispositif de verrouillage, décrite ci-dessus à titre d'exemple, mais elle embrasse au contraire toutes les variantes.

## Revendications

1. Dispositif de verrouillage (9) conçu pour être disposé dans une zone de jonction d'une nacelle, comportant un système de verrouillage (10), destiné à être monté sur une première demi-coquille (4) de la nacelle, coopérant avec un organe de retenue (11) destiné à être monté sur une seconde demi-coquille (5), le système de verrouillage (10) étant actionnable entre un état verrouillé et un état déverrouillé par rapport à l'organe de retenue (11), le système de verrouillage (10) et l'organe de retenue (11) étant déplaçables l'un par rapport à l'autre entre une position rapprochée de ceux-ci dans laquelle ils peuvent être verrouillés l'un par rapport à l'autre et une position écartée de ceux-ci, le système de verrouillage (10) et/ou l'organe de retenue (11) comportant des moyens de blocage (21, 25), conçus pour autoriser le verrouillage du système de verrouillage (10) par rapport à l'organe de retenue (11) lorsque ceux-ci sont en position rapprochée, et pour interdire leur verrouillage lorsque ceux-ci sont en position écartée, le système de verrouillage (10) comportant un crochet (13) apte à venir en prise avec l'organe de retenue (11), et un organe de manoeuvre (30) coopérant avec le crochet (13) de manière à réaliser l'engagement ou le dégagement de celui-ci par rapport à l'organe de retenue (11) lors de l'actionnement de l'organe de manoeuvre (30),
**caractérisé en ce que** les moyens de blocage (10) comportent des moyens de liaison (21) reliés à l'organe de manoeuvre (30) et déplacés lors de l'actionnement de celui-ci, et un organe formant butée mobile (25, 26) déplaçable entre une position de blocage dans laquelle les moyens de liaison (21) viennent en appui contre l'organe formant butée mobile (25, 26) lors de l'actionnement de l'organe de manoeuvre (30), et une position de déblocage dans laquelle l'organe formant butée mobile (25, 26) est écarté de la trajectoire des moyens de liaison (21) lors de l'actionnement de l'organe de manoeuvre (30), l'organe formant butée mobile (25, 26) étant équipé d'au moins une patte d'actionnement (29) présentant une extrémité d'actionnement (30), l'organe de retenue (11) comportant au moins un plot (33) dont l'extrémité libre vient en appui contre l'extrémité d'actionnement (30) de la patte (29), en position rapprochée du système de verrouillage (10) et de l'organe de retenue (11), de manière à déplacer l'organe formant butée mobile (25, 26) en position de déblocage.

2. Dispositif selon la revendication 1, **caractérisé en ce que** les moyens de liaison comportent un bras (21) faisant saillie vers l'extérieur, l'organe formant butée mobile se présentant sous la forme d'un clapet mobile (25) équipé d'un crochet (26) formant butée.

3. Dispositif selon l'une des revendications 1 ou 2, **caractérisé en ce que** l'organe formant butée mobile (25, 26) est soumis à des moyens de rappel élastiques aptes à le déplacer en position de blocage.

4. Dispositif selon l'une des revendications 1 à 3, **caractérisé en ce que** le crochet (13) comporte une extrémité recourbée (14) apte à venir en prise avec l'élément de retenue (11, 32), le crochet (13) étant monté pivotant autour d'un axe d'extrémité (15) situé à l'opposé de l'extrémité recourbée (14), le système de verrouillage (10) comportant un axe principal (17), destiné à être rattaché fixement à la première demi-coquille (4), une articulation comprenant au moins une bielle de compression (16) montée pivotante autour de l'axe principal (17) et d'un axe intermédiaire (18) positionné entre l'axe principal (17) et l'axe d'extrémité (15), les moyens de liaison (21) présentant une première branche (22) destinée à coopérer avec organe formant butée mobile (26) et une seconde branche (24) reliée à la première par une zone médiane, la zone médiane du bras (21) étant montée pivotante autour de l'axe d'extrémité (15), la seconde branche (24) étant montée pivotante autour de l'axe intermédiaire (18).

5. Dispositif selon l'une des revendications 1 à 4, **caractérisé en ce que** l'organe formant butée mobile (25, 26) est monté pivotant autour d'un axe d'articulation destiné à être fixe par rapport à la première demi-coquille (4).

6. Nacelle de turboréacteur comprenant une section avant (1) d'entrée d'air, une section médiane (2) destinée à entourer une soufflante du turboréacteur, et une section arrière (3) formée à partir d'au moins une première et une seconde demi-coquilles (4, 5) montées mobiles en rotation sur un mat (6) de manière à pouvoir se déployer chacune entre une position de travail dans laquelle les demi-coquilles (4, 5) sont rapprochées l'une de l'autre et une position de maintenance dans laquelle les demi-coquilles (4, 5) sont écartées l'une de l'autre, **caractérisée en ce que** la nacelle est équipée, dans une zone de jonction des deux demi-coquilles (4, 5), d'au moins un dispositif de verrouillage (9) selon l'une des revendications 1 à 5, le système de verrouillage (10) étant monté sur la première demi-coquille (4), l'organe de retenue (11) étant monté sur la seconde demi-coquille (5).

7. Aéronef, **caractérisé en ce qu'**il comporte au moins une nacelle selon l'une des revendications 1 à 6.

## Patentansprüche

1. Verriegelungsvorrichtung (9), die dafür ausgebildet ist, in einem Verbindungsbereich einer Gondel angeordnet zu werden, umfassend ein Verriegelungssystem (10), das dazu vorgesehen ist, an einer ersten Halbschale (4) der Gondel montiert zu werden, welches mit einem Halteglied (11) zusammenwirkt, das dazu vorgesehen ist, an einer zweiten Halbschale (5) montiert zu werden, wobei das Verriegelungssystem (10) im Verhältnis zum Halteglied (11) zwischen einem verriegelten Zustand und einem entriegelten Zustand betätigbar ist, wobei das Verriegelungssystem (10) und das Halteglied (11) im Verhältnis zueinander zwischen einer angenäherten Stellung derselben, in der sie im Verhältnis zueinander verriegelt werden können, und einer beabstandeten Stellung derselben beweglich sind, wobei das Verriegelungssystem (10) und/oder das Halteglied (11) Sperrmittel (21, 25) umfassen, die dafür ausgebildet sind, das Verriegeln des Verriegelungssystems (10) im Verhältnis zum Halteglied (11) zuzulassen, wenn sich dieselben in angenäherter Stellung befinden, und dafür, ihr Verriegeln zu unterbinden, wenn sich dieselben in beabstandeter Stellung befinden, wobei das Verriegelungssystem (10) einen Haken (13) umfasst, der in der Lage ist, mit dem Halteglied (11) in Eingriff zu kommen, und ein Stellglied (30), das mit dem Haken (13) zusammenwirkt, um bei Betätigen des Stellglieds (30) das Eingreifen oder Lösen desselben im Verhältnis zum Halteglied (11) auszuführen,
**dadurch gekennzeichnet, dass** die Sperrmittel (10) Verbindungsmittel (21) umfassen, die mit dem Stellglied (30) verbunden sind und bei Betätigen desselben bewegt werden, und ein einen mobilen Anschlag (25, 26) bildendes Glied, das zwischen einer Sperrstellung, in der die Verbindungsmittel (21) beim Betätigen des Stellglieds (30) gegen das einen mobilen Anschlag (25, 26) bildende Glied in Anlage kommen, und einer Entsperrstellung beweglich ist, in der das einen mobilen Anschlag (25, 26) bildende Glied von der Bahn der Verbindungsmittel (21) beim Betätigen des Stellglieds (30) beabstandet ist, wobei das einen mobilen Anschlag (25, 26) bildende Glied mit mindestens einer Betätigungsklaue (29) ausgestattet ist, die ein Betätigungsende (30) aufweist, wobei das Halteglied (11) mindestens einen Stift (33) aufweist, dessen freies Ende in angenäherter Stellung des Verriegelungssystems (10) und des Halteglieds (11) gegen das Betätigungsende (30) der Klaue (29) in Anlage kommt, um das einen mobilen Anschlag (25, 26) bildende Glied in Entsperrstellung zu bewegen.

2. Vorrichtung nach Anspruch 1, **dadurch gekennzeichnet, dass** die Verbindungsmittel einen Arm (21) umfassen, der nach außen vorspringt, wobei sich das einen mobilen Anschlag bildende Glied in der Form einer beweglichen Klappe (25) darstellt, die mit einem einen Anschlag bildenden Haken (26) ausgestattet ist.

3. Vorrichtung nach einem der Ansprüche 1 oder 2, **dadurch gekennzeichnet, dass** das einen mobilen Anschlag (25, 26) bildende Glied elastischen Rückstellmitteln unterworfen ist, die in der Lage sind, es in Sperrstellung zu bewegen.

4. Vorrichtung nach einem der Ansprüche 1 bis 3, **dadurch gekennzeichnet, dass** der Haken (13) ein umgebogenes Ende (14) umfasst, das in der Lage ist, mit dem Halteglied (11, 32) in Eingriff zu kommen, wobei der Haken (13) um eine Endachse (15), die dem umgebogenen Ende (14) gegenüberliegt, schwenkend montiert ist, wobei das Verriegelungssystem (10) eine Hauptachse (17) umfasst, die dazu vorgesehen ist, fest an der ersten Halbschale (4) angebracht zu werden, wobei ein Gelenk mindestens ein Druckpleuel (16) umfasst, das um die Hauptachse (17) und um eine Zwischenachse (18), die zwischen der Hauptachse (17) und der Endachse (15) positioniert ist, schwenkend montiert ist, wobei die Verbindungsmittel (21) einen ersten Arm (22) aufweisen, der dazu vorgesehen ist, mit einen mobilen Anschlag (26) bildenden Glied zusammenzuwirken, und einen zweiten Arm (24), der über einen mittleren Bereich mit dem ersten verbunden ist, wobei der mittlere Bereich des Arms (21) um die Endachse (15) schwenkend montiert ist, wobei der zweite Arm (24) um die Zwischenachse (18) schwenkend montiert ist.

5. Vorrichtung nach einem der Ansprüche 1 bis 4, **dadurch gekennzeichnet, dass** das einen mobilen Anschlag (25, 26) bildende Glied um eine Gelenkachse schwenkend montiert ist, die dazu vorgesehen ist, im Verhältnis zur ersten Halbschale (4) fest zu sein.

6. Triebwerksgondel, umfassend einen vorderen Abschnitt (1) zum Einlassen von Luft, einen mittleren Abschnitt (2), der dazu vorgesehen ist, ein Gebläse des Triebwerks zu umgeben, und einen hinteren Abschnitt (3), der aus mindestens einer ersten und einer zweiten Halbschale (4, 5) gebildet ist, die drehbeweglich an einer Matte (6) montiert sind, um sich jede zwischen einer Arbeitsstellung, in der die Halbschalen (4, 5) einander angenähert sind, und einer Wartestellung verlagern zu können, in der die Halbschalen (4, 5) voneinander beabstandet sind, **dadurch gekennzeichnet, dass** die Gondel in einem Verbindungsbereich der zwei Halbschalen (4, 5) mit mindestens einer Verriegelungsvorrichtung (9) nach einem der Ansprüche 1 bis 5 ausgestattet ist, wobei das Verriegelungssystem (10) an der ersten Halbschale (4) montiert ist, wobei das Halteglied (11) an der zweiten Halbschale (5) montiert ist.

7. Luftfahrzeug, **dadurch gekennzeichnet, dass** es mindestens eine Gondel nach einem der Ansprüche 1 bis 6 umfasst.

## Claims

1. A locking device (9) designed to be disposed in a junction area of a nacelle, including a locking system (10), intended to be mounted on a first half-shell (4) of the nacelle, cooperating with a retaining member (11) intended to be mounted on a second half-shell (5), le locking system (10) can be actuated between a locked state and an unlocked state relative to the retaining member (11), the locking system (10) and the retaining member (11) being displaceable relative to each other between a position close thereto wherein they can be locked relative to each other and a position spaced apart therefrom, the locking system (10) and/or the retaining member (11) including blocking means (21, 25), designed to allow the locking of the locking system (10) relative to the retaining member (11) when they are in a close position, and to prohibit their locking when they are in a spaced position, le locking system (10) including a hook (13) engageable with the retaining member (11), and an operating member (30) cooperating with the hook (13) so as to achieve the engagement or the disengagement of the latter relative to the retaining member (11) upon actuation of the operating member (30),
**characterized in that** the blocking means (10) include connecting means (21) linked to the operating member (30) and displaced upon actuation of the latter, and a member (25, 26) forming a movable stop displaceable between a blocking position wherein the connecting means (21) bear against the member (25, 26) forming a movable stop upon actuation of the operating member (30), and an unblocking position wherein the member (25, 26) forming a movable stop is spaced apart from the path of the connecting means (21) upon actuation of the operating member (30), the member (25, 26) forming a movable stop being equipped with at least one actuating tab (29) having an actuating end (30), the retaining member (11) including at least one pad (33) of which free end bears against the actuating end (30) of the tab (29), in a position close to the locking system (10) and to the retaining member (11), so as to move the member (25, 26) forming a movable stop to the unblocking position.

2. The device according to claim 1, **characterized in that** the connecting means include an arm (21) protruding outwards, the member forming a movable stop being in the form of a movable valve (25) equipped with a hook (26) forming a stop.

3. The device according to any of claims 1 or 2, **characterized in that** the member (25, 26) forming a movable stop is subjected to elastic return means capable of moving it to the blocking position.

4. The device according to any of claims 1 to 3, **characterized in that** the hook (13) includes a curved end (14) engageable with the retaining element (11, 32), the hook (13) being pivotally mounted about an end axis (15) located opposite the curved end (14), the locking system (10) including a main axis (17), intended to be fixedly attached to the first half-shell (4), a hinge comprising at least one compression rod (16) pivotally mounted about the main axis (17) and an intermediate axis (18) positioned between the main axis (17) and the end axis (15), the connecting means (21) having a first branch (22) intended to cooperate with a member (26) forming a movable stop and a second branch (24) linked to the first one by a median area, the median area of the arm (21) being pivotally mounted about the end axis (15), the second branch (24) being pivotally mounted about the intermediate axis (18).

5. The device according to any of claims 1 to 4, **characterized in that** the member (25, 26) forming a movable stop is pivotally mounted about a hinge axis intended to be fixed relative to the first half-shell (4).

6. A turbojet engine nacelle comprising an air inlet front section (1), a median section (2) intended to surround a fan of the turbojet engine, and a rear section (3) formed from at least a first and a second half-shells (4, 5) movably mounted in rotation on a mast (6) so as to be capable of deploying each between a working position wherein the half-shells (4, 5) are brought closer to each other and a maintenance position wherein the half-shells (4, 5) are spaced apart from each other, **characterized in that** the nacelle is equipped, in a junction area of the two half-shells (4, 5), with at least one locking device (9) according to any of claims 1 to 5, the locking system (10) being mounted on the first half-shell (4), the retaining member (11) being mounted on the second half-shell (5).

7. An aircraft, **characterized in that** it includes at least one nacelle according to any of claims 1 to 6.
